# EUROPEAN PATENT APPLICATION

(11) **EP 2 498 437 A2**
(43) Date of publication of application: **12.09.2012**
(21) Application number: 12158451.0
(22) Date of filing: 07.03.2012
(51) Int. Cl.: H04L 9/08

(54) **Issuing implicit certificates**

(30) Priority: 08.03.2011 US 201113043311
(71) Applicant: Certicom Corp., Mississauga, Ontario L4W 0B5 (CA)
(72) Inventor: Zaverucha, Gregory Marc, Mississauga, Ontario L4W 0B5 (CA)
(74) Representative: Finnie, Peter John

(57) **Abstract**

Methods, systems, and computer programs for issuing an implicit certificate are disclosed. In some implementations, a certificate authority of an elliptic curve cryptography (ECC) system performs one or more operations for issuing the implicit certificate. A certificate request associated with a requester is received, and the certificate request includes a first element *R_{U}* in a group. In response to receiving the request, a second element *P_{U}* in the group is generated based on the first element *R_{U}*. An implicit certificate *Cert_{U}* is generated based on the second element *P_{U}.* Whether the public key *Q_{U}* of the requester corresponds to a trivial public key, such as an identity element of the group, can be determined. For example, the certificate authority can compute the public key *Q_{U}* of the requester based on the first element *P_{U},* the implicit certificate *Cert_{U},* and a public key *Q_{CA}* of the certificate authority.

## Description

### CLAIM OF PRIORITY

This application claims priority to U.S. Patent Application Serial No. 13/043,311 filed on March 8, 2011.

### BACKGROUND

This specification relates to issuing implicit certificates in a cryptography system. Cryptography systems enable secure communication over public channels. For example, digital signature schemes can be implemented in a public key cryptography system. In some cryptography systems, users verify the authenticity of other users' digital signatures based on certificates issued by a trusted third party.

### BRIEF DESCRIPTION OF THE DRAWINGS

FIG. 1 is a schematic diagram of an example data communication system.

FIG. 2 is a schematic diagram of an example cryptography system.

FIG. 3 is a signaling and flow chart showing example communications and operations in a cryptography system.

FIG. 4 is a flow chart showing an example process for issuing implicit certificates.

Like reference numbers and designations in the various drawings indicate like elements.

### DETAILED DESCRIPTION

In a general aspect, a certificate authority issues implicit certificates that can be used in a public key cryptography scheme. The certificate authority receives a certificate request and generates an implicit certificate in response to receiving the request. A check can be performed to verify that the implicit certificate does not correspond to a trivial public key value, for example, the identity element of a group. A check can be performed to verify that the implicit certificate data does not correspond to a public key value that has already been assigned to another user. Additional or different checks can be performed.

In some aspects, a certificate authority receives a certificate request. The certificate request includes an element *R_{U}* in a group and a user identification U associated with the requester. In response to receiving the certificate request, public key reconstruction data *P_{U}* is generated based on the first element *R_{U},* where *P_{U}* is another element in the group. An implicit certificate *Cert_{U}* can be generated based on the public key reconstruction data *P_{U}.* The public key reconstruction data *P_{U},* the implicit certificate *Cert_{U},* and a public key *Q_{CA}* of the certificate authority can be used to determine whether the public key *Q_{U}* of the requester corresponds to an identity element *O* of the group. The public key reconstruction data *P_{U},* the implicit certificate *Cert_{U},* and a public key *Q_{CA}* of the certificate authority can be used to determine whether the public key *Q_{U}* of the requester corresponds to public key that has already been assigned to another user entity.

In some aspects, a certificate authority receives a certificate request associated with a requester. The certificate request includes a first point *R_{U}* in an elliptic curve group. In response to receiving the request, a second point *P_{U}* in the elliptic curve group is generated based on the first point *R_{U}.* An implicit certificate *Cert_{U}* is generated based on the second elliptic curve point *P_{U}.* The certificate authority can determine whether a public key *Q_{U}* of the requester corresponds to an identity element *O* of the elliptic curve group based on the second point *P_{U},* the implicit certificate *Cert_{U},* and a public key *Q_{CA}* of the certificate authority. The certificate authority can determine whether a public key *Q_{U}* of the requester corresponds to another user entity's public key based on the second point *P_{U},* the implicit certificate *Cert_{U},* and a public key *Q_{CA}* of the certificate authority.

Implementations of these and other aspects can include one or more of the following features. A value *k* can be selected, and a third point *kG* in the elliptic curve group can be generated. The second point *P_{U}* can be generated by computing *R_{U}+kG.* The implicit certificate *Cert_{U}* can be an encoding of the second point *P_{U}* and additional information. A hash value e can be generated based on the implicit certificate *Cert_{U}.* The certificate authority can determine whether the public key *Q_{U}* corresponds to the identity element based on the second point *P_{U},* a hash value e, and the public key *Q_{CA}* of the certificate authority. Determining whether the public key *Q_{U}* corresponds to the identity element can include generating the public key *Q_{U}* by computing *eP_{U} + Q_{CA}* and comparing the public key *Q_{U}* to the identity element *O.* The certificate authority can receive elliptic curve domain parameters that identify the elliptic curve group. The elliptic curve domain parameters can also identify a base point generator G in the elliptic curve group.

Additionally or alternatively, implementations of these and other aspects can include one or more of the following features. When the public key *Q_{U}* corresponds to the identity element, another value *k'* can be selected. A fourth point *k'G* in the elliptic curve group can be generated, and a fifth point P'_{U} in the elliptic curve group can be generated by computing *R_{U}+k'G.* A new implicit certificate Cert'_{U} can be generated based on the fifth elliptic curve point P'_{U} The certificate authority can determine whether a new public key Q'_{U} of the requester corresponds to an identity element of the elliptic curve group based on the fifth point P'_{U} the new implicit certificate Cert'_{U} and the public key *Q_{CA}* of the certificate authority. The operations can be iterated until a terminating condition, for example Q'_{U}≠ is reached.

Additionally or alternatively, implementations of these and other aspects can include one or more of the following features. When the public key *Q_{U}* does not correspond to the identity element, private key contribution data r can be generated based on the hash value e, the value *k,* and a private key of the certificate authority *d_{CA}.* The certificate authority can send a response to the requester. The response includes the implicit certificate *Cert_{U}* and the private key contribution data r.

Additionally or alternatively, implementations of these and other aspects can include one or more of the following features. The implicit certificate *Cert_{U}* can be published. The request can include an identification U associated with the requester. The implicit certificate *Cert_{U}* can be generated based on the second point *P_{U}* and the identification U. Certificate data *I_{U}* can be obtained. The certificate data *I_{U}* can include the user identification U and additional information. The implicit certificate *Cert_{U}* can be generated based on the second point *P_{U}* and the certificate data *I_{U}.* The implicit certificate *Cert_{U}* can be generated by encoding the second elliptic curve point *P_{U}* in the implicit certificate *Cert_{U}* according to an encoding scheme.

Additionally or alternatively, implementations of these and other aspects can include one or more of the following features. The certificate authority can be implemented at one or more certificate authority servers. The certificate authority servers can be configured to communicate with a terminal over a data network. A cryptography module implemented at the terminal can generate the certificate request and send the certificate request to the certificate authority server. The certificate authority can send a response to the terminal. The response can include the implicit certificate *Cert_{U}* and the private key contribution data r. The terminal can receive the response from the certificate authority server and the cryptography module can generate a digital signature based on the response. The digital signature can be generated based on a key pair implicitly certified by the implicit certificate *Cert_{U}.*

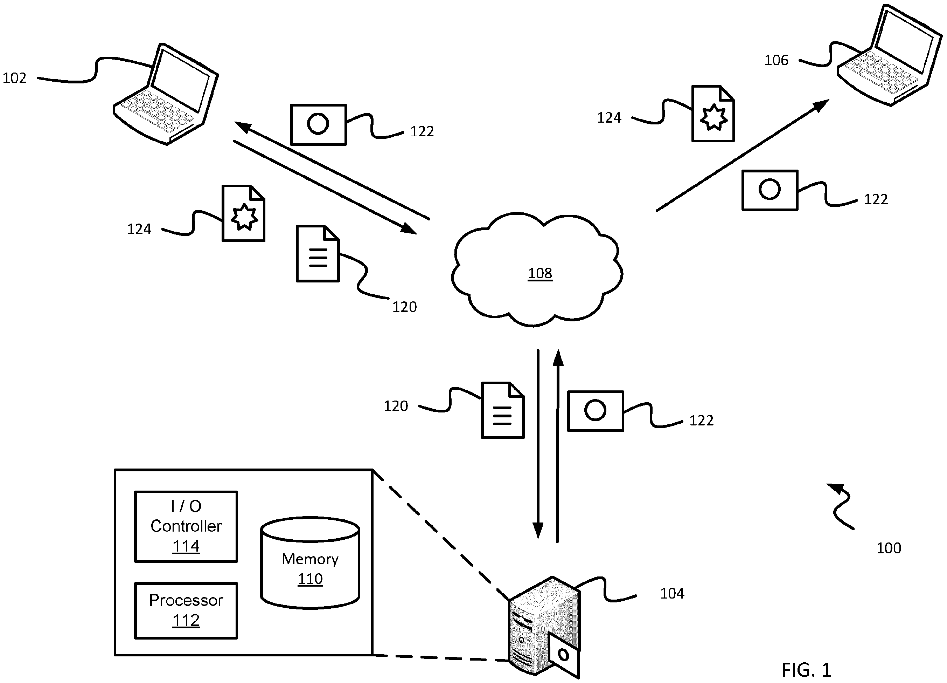

FIG. 1 is a schematic diagram of an example data communication system 100. The data communication system 100 includes a certificate authority server 104, two terminals 102, 106, and a data network 108. The data communication system 100 can include additional, fewer, or different components. For example, the data communication system 100 may include additional storage devices, additional servers (including additional certificate authority servers), additional terminals, and other features not shown in the figure.

The certificate authority server 104 and the terminals 102, 106 can communicate with each other and with other components of the data communication system 100 over the data network 108. In the example shown in FIG. 1, the terminal can send a certificate request 120 to the certificate authority server 104, and the certificate authority can respond by sending an implicit certificate 122 to the terminal 102. The terminal 102 can send a signed message 124 to the terminal 106, and the terminal 106 can verify the authenticity of the signed message 124 using the implicit certificate 122 from the certificate server authority 104. The data communication system 100 can support additional or different types of communication. In some implementations, the terminals 102, 106 can also exchange encrypted messages and other types of information with each other, with the certificate authority server 104, and with other components of the data communication system 100.

The certificate authority server 104 is a computing system that can perform operations of a certificate authority in a cryptography system. The certificate authority server 104 is generally operable to receive, transmit, process, and store information associated with the cryptography system. Although FIG. 1 shows a single certificate authority server 104, a certificate authority can be implemented using multiple certificate authority servers 104, including server clusters, as well as additional or different types of computing devices other than servers.

The certificate authority server 104 generally includes a data processing apparatus, a data storage medium, and a data communication interface. The example certificate authority server 104 shown in FIG. 1 includes a processor 112, a memory 110, and an input/output controller 114. The memory 110 can include, for example, a random access memory (RAM), a storage device (e.g., a writable read-only memory (ROM), etc.), a hard disk, or another type of storage medium. The certificate authority server 104 can be preprogrammed or it can be programmed (and reprogrammed) by loading a program from another source (e.g., from a CD-ROM, from another computer device through a data network, or in another manner). The input/output controller 114 can be coupled to input/output devices (e.g., a monitor, a keyboard, etc.) and to the data network 108. The input/output devices receive and transmit data in analog or digital form over communication links such as a serial link, wireless link (e.g., infrared, radio frequency, etc.), parallel link, or another type of link.

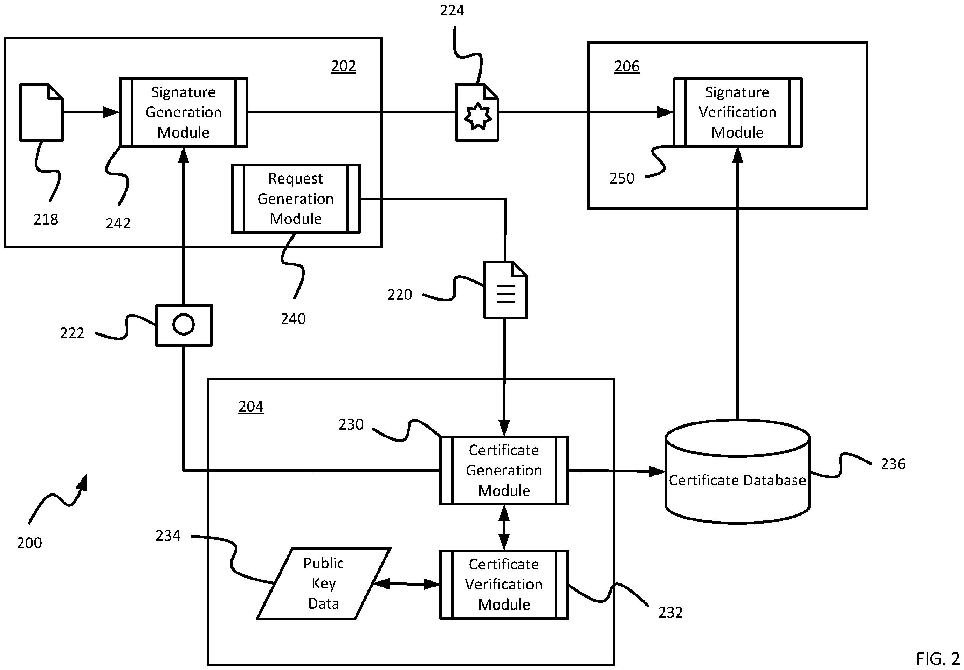

The memory 110 can store instructions (e.g., computer code) associated with computer applications, programs and computer program modules, and other resources. For example, the memory 110 can store instructions associated with the computer program modules of the certificate authority module 204 shown in FIG. 2. The memory 110 can also store application data and data objects that can be interpreted by applications, programs, modules, or virtual machines running on the certificate authority server 104. For example, the memory 110 can store the data objects that are obtained or processed by the certificate authority module 204 in FIG. 2. The memory 110 can store additional information, for example, files and instruction associated with an operating system, device drivers, archival data, or other types of information.

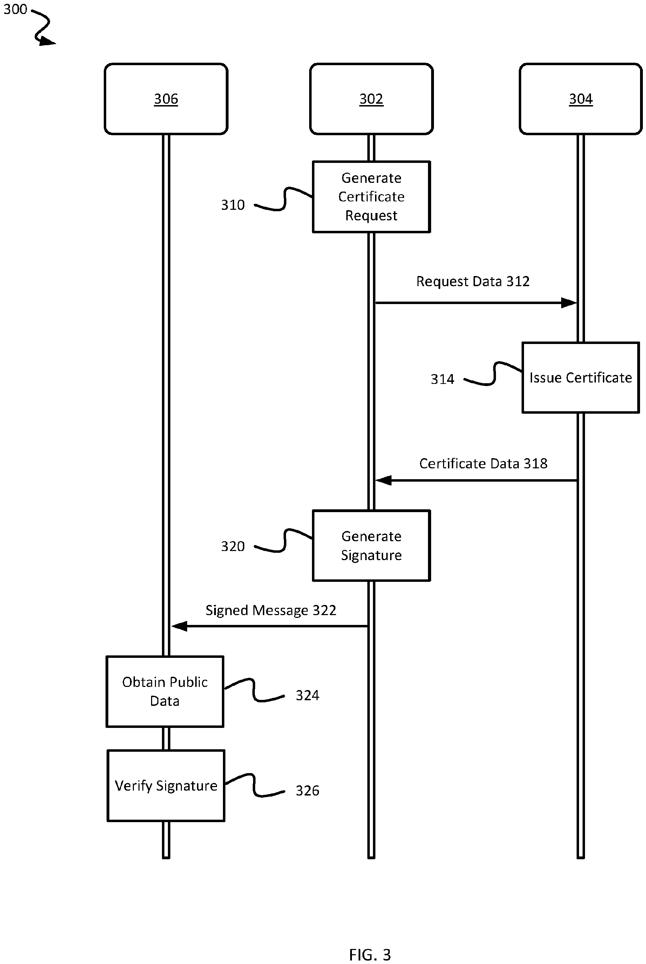

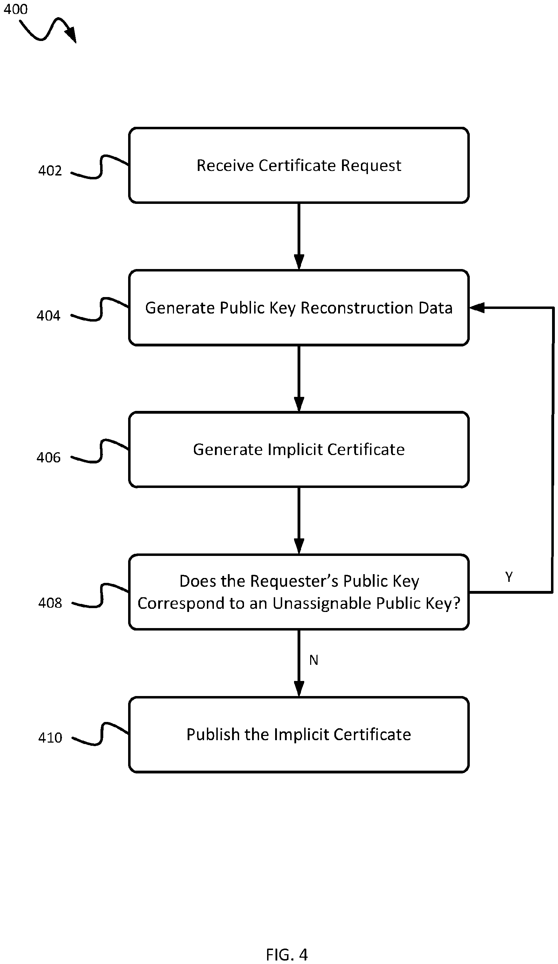

The processor 112 can execute instructions to generate output data based on data inputs. For example, the processor 112 can run applications and programs by executing or interpreting the software, scripts, functions, executables, and other types of computer program modules. For example, the processor 112 may perform one or more of the operations shown in FIGS. 3 and 4. The input data received by the processor 112 and the output data generated by the processor 112 can be stored in a computer-readable medium, such as the memory 110 or a storage device.

The data network 108 can include any type of data communication network. For example, the data network 108 can include a wireless or wired network, a cellular network, a telecommunications network, an enterprise network, an application-specific public network, a Local Area Network (LAN), a Wide Area Network (WAN), a private network, a public network (such as the Internet), a WiFi network, a network that includes a satellite link, or another type of data communication network. The data network 108 can include a tiered structure defined by firewalls or similar features that implement various levels of security.

The terminals 102, 106 are computing devices that can communicate over the data network 108 based on communication schemes specified by the cryptography system. The terminals 102, 106 are generally operable to receive, transmit, process, and store information. Although FIG. 1 shows two terminals 102, 106, a data communication system 100 may include any number of terminals. The data communication system 100 can include groups or subgroups of terminals that can communicate with each other, but not necessarily with the terminals in other groups or subgroups. In some implementations, each group of terminals can access a dedicated certificate authority server and a database of implicit certificates that have been issued by the dedicated certificate authority server. The data communication system 100 can include terminals of disparate types, having different types of hardware and software configurations, and in a variety of different locations. In some cases, multiple devices or subsystems can be identified together as a single terminal.

The terminals 102, 106 typically include a data processing apparatus, a data storage medium, and a data communication interface. For example, the terminals 102, 106 can include a memory, a data processor, and an input/output controller. A terminal can include user interface devices, for example, a monitor, touchscreen, mouse, or keyboard. The terminals 102, 106 interface with the data network 108. The memory of the terminal can store messages and information associated with the cryptography system. For example, a terminal may store the public and private key data, digital certificate data, and other types of information. The memory of the terminal can store instructions (e.g., computer code) associated with computer applications, programs and computer program modules, and other resources. For example, the terminals can store instructions associated with the computer program modules of the terminal modules 202, 206 shown in FIG. 2.

Terminals can include handheld devices such as smart phones, personal digital assistants (PDAs), portable media players, laptops, notebooks, tablets, and others. Terminals can include work stations, mainframes, non-portable computing systems, devices installed in structures, vehicles, and other types of installations. Terminals can include embedded communication devices. For example, the terminals can include messaging devices that are embedded in smart energy meters of a smart energy system. Other types of terminals may also be used.

In one aspect of operation, the terminal 102 sends the certificate request 120 to the certificate authority server 104, and the certificate authority server 104 generates the implicit certificate 122 for the terminal 102. The implicit certificate 122 associates a particular public key value with a particular user entity (e.g., the terminal 102, a user associated with the terminal 102, a module implemented at the terminal 102, etc.). Prior to publishing the implicit certificate 122, the certificate authority server 104 can determine whether the public key corresponds to a trivial public key value (e.g., the identity element) or whether the public key is already associated with another user entity. After the implicit certificate 122 is verified, the terminal 102 receives the implicit certificate 122 from the certificate authority server 104. When the terminal 102 has a message to send to the terminal 106, the terminal 102 generates a digital signature for the message based on the implicit certificate 122. The digital signature is combined with the message to form the signed message 124, which the terminal 102 sends to the terminal 106. In some implementations, the digital signature and the message are sent separately. The terminal 106 receives the signed message 124, obtains the implicit certificate 122, and verifies the digital signature based on the implicit certificate 122. Implicit certificates can also be used in other types of schemes, for example, encryption schemes.

An implicit certificate scheme implemented by the data communication system 100 allows the terminals 102, 106 to communicate with each other in a secure manner, even when communications on the data network 108 are observable by malicious users. The implicit certificate 122 binds a user entity associated with the terminal 102 to a particular public key value that can be used to verify digital signatures generated by the terminal 102. The terminal 106 can obtain the implicit certificate 122 to verify that the digital signature was generated by the user entity associated with the terminal 102, and not by an impostor. The terminal 106 can also verify that the implicit certificate 122 was generated by a trusted third party at the certificate authority server 104. In this manner, the implicit certificate 122 serves as confirmation by the trusted third party that the signed message 124 was signed by the user entity associated with the terminal 102 and not by an impostor.

The implicit certificate 122 includes an identification of the user entity associated with the terminal 102. The implicit certificate 122 includes information that can be used to construct the user entity's public key. In some cases, using the implicit certificate 122 to verify a digital signature also confirms that the user entity is in possession of the corresponding private key. The example implicit certificate 122 shown in FIG. 1 includes neither an explicit representation of the public key nor an explicit representation of the certificate authority's digital signature. Thus, in some implementations, the implicit certificate 122 is more compact than some other types of digital certificates. In some cases, the implicit certificate 122 includes a digital signature of the certificate authority that allows user entities, for example a user entity associated with the terminal 106, to verify that the implicit certificate 122 was generated by the trusted certificate authority. The certificate authority can, in some cases, require the user entity to prove knowledge of the user entity's private key. In some cases, the implicit certificate 122 includes an explicit representation of the user's public key.

Instead of explicitly representing the public key of the terminal 102, the example implicit certificate 122 in FIG. 1 includes public key reconstruction data that can be combined with other information (e.g., the certificate authority's public key, etc.) to generate the public key of the user entity associated with the terminal 102. The example implicit certificate 122 is constructed such that successful verification of a digital signature generated by the terminal 102 serves as confirmation that the terminal 102 is in possession of the private key. Thus, according to some implicit certificate schemes, binding of a user entity to its public key and the user entity's knowledge of its private key can be verified in unison during key usage.

Because the example implicit certificate 122 does not include an explicit representation of the public key of the terminal 102, it is possible in some cases for the certificate authority to issue the implicit certificate 122, and for the terminals 102, 106 to use the implicit certificate 122, without ever generating an explicit representation of the public key value. For example, in some elliptic curve cryptography systems, the value of the public key can be expressed *Q_{U}* = *eP_{U}* + *Q_{CA},* and instead of explicitly computing the value of the public key *Q_{U},* the terminals 102, 106 incorporate the values e, *P_{U},* and *Q_{CA}*into a larger equation (e.g., a signing equation or a verifying equation) when they use the public key, for example, to generate or verify a digital signature. As such, the public key can potentially be used, in effect, without computing the public key.

Some public key values that would otherwise be considered valid in the cryptography system are nonetheless compromisable or otherwise undesirable. For example, the private keys associated with some public keys can be derived based on trivial computations (or even no computation) or based on other information available to users of the cryptography system (e.g., implicit certificates of other users), and therefore those public keys do not always guarantee the level of security specified by the cryptography system parameters. An example of a trivial public key is the identity element (*i.e.,* the point at infinity) of an elliptic curve group in an elliptic curve-based cryptography system. The private key associated with the identity element is zero. As such, if a user is known to have a public key equal to the identity element, malicious parties can impersonate the user because they know the user's private key to be zero. Another type of compromisable public key is a public key that is already bound to another user entity by a previously-issued implicit certificate. For example, if two users have the same public and private key pair, either of the two users could potentially identify the coincidence and impersonate the other user. These types of scenarios can arise in an implicit certificate scheme, where the key pair assigned to a user entity depends on values generated by both the user entity and the certificate authority and neither the user entity nor the certificate authority explicitly selects the private key or the public key.

To reduce or eliminate the chance of issuing an implicit certificate 122 that binds a user to a compromisable public key, the certificate authority can check the value of the public key prior to publishing the implicit certificate. For example, the certificate authority can generate the implicit certificate 122, and then compare the public key value to the trivial public key values, to a list of public key values assigned to other user entities, or to other types of public key values that could compromise the security of the cryptography system. If the public key value is equal to one of the compromisable (or otherwise unassignable) public key values, then the certificate authority can generate a new implicit certificate and perform the check again. If the public key value is not equal to one of the compromisable (or otherwise unassignable) public key values, then the certificate authority can publish the implicit certificate 122 for use in the cryptography system.

In some cases, there are advantages to performing the checks against trivial public keys and other public keys at the certificate authority. For example, performing these checks at the certificate authority prior to publishing the implicit certificate 122 avoids the possibility of a malicious user recognizing the trivial public key and impersonating the user before the implicit certificate 122 is revoked. Moreover, the certificate authority may have faster or more convenient access to a list of public keys that have been assigned to other user entities. In some cases, the checks against trivial public keys and issued public keys may be performed by at a terminal or by another entity in the cryptography system. For example, if the terminal and the certificate authority share a secure channel, the terminal may be able to perform the check prior to publishing the implicit certificate 122 without exposing the public key value to a malicious user prior to the check. As another example, the checks may be performed by another entity prior to publishing the implicit certificate 122.

FIG. 2 is a schematic diagram of an example cryptography system 200 that implements an implicit certificate scheme. The cryptography system 200 includes terminal modules 202, 206, a certificate authority module 204, and a certificate database 236. The cryptography system 200 can include additional or different components. The terminal modules 202, 206 can each be computer program modules implemented by one or more terminals. For example, the terminal module 202 can be implemented by the terminal 102 of FIG. 1, and the terminal module 206 can be implemented by the terminal 106 of FIG. 1. The certificate authority module 204 can be a computer program module implemented by one or more certificate authority servers. For example, the certificate authority module 204 can be implemented by certificate authority server 104 of FIG. 1. The certificate database 236 can be a database module implemented by one or more servers, server clusters, or other types of computing systems. For example, the certificate database 236 can be implemented by one or more certificate authority servers.

The terminal modules 202, 206, the certificate authority module 204, and the certificate database 236 can be implemented by additional or different types of hardware systems. For example, the certificate authority module 204, or in some instances individual modules, data, or other aspects of the certificate authority module 204 can be offloaded to non-certificate authority devices. In some instances, for example in a peer-to-peer computing environment, server functionality can be distributed among client devices. As another example, terminal modules, or in some instances individual modules, data, or other aspects of a terminal module, can be provided on a server device, such as a certificate authority server or another type of server.

The terminal modules 202, 206 and the certificate authority module 204 can communicate with each other, for example, over a data network or another type of communication link. The terminal modules 202, 206 and the certificate authority module 204 can access the certificate database 236. In some implementations, the terminal modules 202, 206 and the certificate authority module 204 can communicate with each other and access the certificate database 236 by messages transmitted over the data network 108 of FIG. 1. In the example shown in FIG. 2, the terminal module 202 can send a certificate request 220 to the certificate authority module 204. The certificate authority module 204 can receive the certificate request 220 from the terminal module 202 and send an implicit certificate 222 to the terminal module 202 in response to the certificate request 220. The certificate authority module 204 can also send the terminal module 202 private key contribution data. The private key contribution data can be sent to the terminal module 202 together with or separate from the implicit certificate 222. The certificate authority module 204 can also publish the implicit certificate 222 to the certificate database 236. The terminal module 202 can receive the implicit certificate 222 from the certificate authority module 204 and send a signed message 224 to the terminal module 206. The terminal module 206 can receive the signed message 224 from the terminal module 202 and retrieve the implicit certificate 222 from the certificate database 236. The cryptography system 200 can support additional or different types of communications.

The cryptography system 200 utilizes an implicit certificate scheme that allows the terminal modules to verify the authenticity of messages received from other terminal modules. According to the implicit certificate scheme, implicit certificates issued by the certificate authority bind each user entity to a particular public key value. A user entity can generate digital signatures based on the user entity's private key, and other users can verify the digital signature based on the user entity's public key. Implicit certificate schemes can be implemented based on different types of groups. For example, the ECQV implicit certificate scheme, as well as others, may be implemented using a group of points on an elliptic curve, a multiplicative group of a finite field, or other groups where the discrete logarithm problem may be hard.

Some of the example operations and capabilities of the cryptography system 200 shown in FIG. 2 are described with respect to the ECQV implicit certificate scheme. In some implementations, the ECQV implicit certificate scheme can function as a general purpose digital signature scheme for applications within computer and communications systems. Some implementations of the ECQV implicit certificate scheme are well suited for application environments where resources, such as bandwidth, computing power, and storage are limited. In those cases, ECQV implicit certificates may provide a more efficient alternative to some other types of certificates. Some implementations of the ECQV implicit certificate scheme are well suited for other types of application environments, for example, with superior resources. Examples of elliptic curve-based digital signatures schemes include ECDSA (Elliptic Curve Digital Signature Algorithm), ECPVS (Elliptic Curve Pintsov Vanstone Signatures), and ECNR (Elliptic Curve Nyberg Rueppel).

Public key cryptographic schemes based on elliptic curve cryptography (ECC) include signature schemes, encryption schemes, key agreement schemes, and other types of schemes. In an ECC scheme, information is encoded in elliptic curve points in an elliptic curve group. An elliptic curve group can be described in terms of a solution to an equation over a finite field, for example, a prime finite field or a characteristic-two finite field. Each point in the elliptic curve group is a pair of field elements corresponding to a solution to an elliptic curve equation. The elliptic curve group also includes an identity element. As a particular example, let F*ₚ* represent a prime finite field where p is an odd prime number, and let *a, b* ∈ F*ₚ* satisfy 4. *a*³ + 27. *b*² ≠ 0 (mod p). The elliptic curve group *E*(F*ₚ*) over F*ₚ*, which is defined by the parameters *a, b* E F*ₚ* includes the set of points P = (*x, y*) for *x, y* E F*ₚ* that represent a solution to the equation *y*² ≡ *x*³ + *a. x* + *b* (mod *p*), together with a point *O* that is the identity element of the elliptic curve group *E*(F*ₚ*). The identity element *O* is sometimes referred to as the point at infinity.

An ECC scheme can use multiple different data types and conversion operations for converting among the data types. For example, it may be useful to communicate or store information in one data format, whereas a different data format may be more convenient or efficient for performing computations. As another example, the ECC scheme may be integrated in a broader communication scheme that uses standardized data formats, and the ECC data can be formatted for compatibility with the communication scheme. Some ECC schemes can represent the same information in several different formats. For example, an ECC scheme may specify a bit string format, an elliptic curve point format, an octet string format, an integer format, a field element format, and others. As such, the ECC scheme can specify routines for converting among the various data types and for checking the validity of each data type. In some implementations, each of the data types can be generated, validated, and converted to other data types by the terminal modules 202, 206 or by the certificate authority module 204 in the cryptography system 200. For example, the terminal modules 202, 206 and the certificate authority module 204 may each include one or more data conversion modules for performing conversions among the data types.

In an ECC scheme, elliptic curve domain parameters over F*ₚ*can be identified by a sextuple T = (*p, a, b, G*, *n,* h). The integer p specifies the finite field F*ₚ*. Field elements *a, b* E F*ₚ* specify an elliptic curve *E*(F*ₚ*) over F*ₚ* as discussed above. The elliptic curve point *G* = (*x_{G}, y_{G}*) on *E*(F*ₚ*) is a base point generator. The integer *n* specifies the order of the base point generator G, having the property nG = *O*. The cofactor *h* is equal to #*E*(F*ₚ*)/ n, which is the number of points on the elliptic curve *E*(F*ₚ*) divided by the order of the base point generator G. Elliptic curve domain parameters may alternatively be identified over other types of finite fields. For example, elliptic curve domain parameters over the characteristic two field F₂*m* can be identified by a septuple T = *(m, f*(*x*)*, a, b,* G, *n,* h), where *m* is an integer specifying the finite field F₂*m* and *f*(*x*) is an irreducible binary polynomial of degree m specifying the representation of F₂*m*. In some implementations, the elliptic curve domain parameters can be generated, validated, and utilized by the terminal modules 202, 206 or by the certificate authority module 204 in the cryptography system 200. In some implementations, the elliptic curve domain parameters can be shared among the modules in the cryptography system 200.

In an ECC scheme, an elliptic curve key pair (d, *Q*) can be generated based on valid elliptic curve domain parameters, for example, *T* = *(p, a, b, G*, *n, h)* or *T* = (*m, f*(*x*)*, a, b,* G, *n,* h). The key pair may be generated by selecting a random integer d in the interval [1, n - 1], computing *Q* = *dG,* and outputting the key pair *(d, Q).* The random integer *d* may be selected or obtained by a random number generator. In some implementations, the elliptic curve key pairs can be generated, validated, and processed by the terminal modules 202, 206 or by the certificate authority module 204 in the cryptography system 200.

Elliptic curve key pairs can be validated using multiple different types of techniques. Validating an elliptic curve key pair provides assurance that the public key satisfies the arithmetic requirements of the cryptography system 200, for example, to prevent malicious insertion of an invalid public key to enable attacks or to detect inadvertent coding or transmission errors. The terminal modules 202, 206 and the certificate authority module 204 can use one technique or multiple techniques to validate elliptic curve key pairs. For example, a terminal module can validate a public key by performing a key validation primitive, by generating the public key itself using a trusted system, by receiving authenticated assurance from a trusted third party based on the terminal module's use of the public key, by receiving authenticated assurance from a trusted third party that the key validation primitive has been performed, etc. The key can be validated by checking that *Q* ≠ *O*, checking that *nQ* ≠ *O*, and checking that the public key *Q* satisfies the elliptic curve equation specified by the elliptic curve domain parameters T = (*p*, *a, b,* G, *n, h)* or T = *(m, f (x), a, b,* G, *n,* h), for example, based on the coordinates (*x_{Q}, y_{Q}*) of the elliptic curve point specified by the public key *Q*.

The terminal module 202 includes a signature generation module 242, a request generation module 240, and other possibly other modules. The request generation module 240 can generate a certificate request 220. The certificate request 220 can include an identification U of a particular user entity. The certificate request 220 can include an elliptic curve point *R_{U}.* The certificate request 220 can include additional or different information. The identification value U can be a unique identifier for a particular user entity, a particular device, or both. The request generation module 240 can generate the elliptic curve point *R_{U}* by selecting a random number *k_{U}* and computing *R_{U}* = *k_{U}G.* For example, the terminal module 202 may have a random number generator module that generates random numbers. The request generation module 240 can perform a validity check to ensure that the values *k_{U}* and *R_{U}* correspond to a valid key pair. The requester can convert the elliptic curve point *R_{U},* the identification value U, and any other information to be included in the certificate request 220 to an appropriate data format (e.g., an octet string).

The signature generation module 242 can use the implicit certificate 222 to generate a digital signature for a message 218. An example technique for generating a digital signature based on an elliptic curve key pair is provided by the Elliptic Curve Digital Signature Algorithm (ECDSA). The message 218 can include any type of electronic document, data file, data object, or other form of information. In some cases, the message 218 is an e-mail message, an electronic document, or an electronic data file that can be edited and rendered by appropriate software applications. In some cases, the message 218 is a data message or a combination of data messages used in signaling applications among hardware components. For example, the message 218 can include status information from a smart energy meter in a smart energy infrastructure. The signature generation module 242 can generate the digital signature using the private key of the terminal module 202 and the implicit certificate 222. The signature generation module can generate the private key of the terminal module 202 based on private key contribution data r, the implicit certificate 222, and the random value *k_{U}* that was used to generate the certificate request 220. The digital signature generated by the signature generation module 242 can be appended to, combined with, or otherwise associated with the message 218 to create the signed message 224. The digital signature can be sent separately from the message 218. The terminal module 202 can send the implicit certificate 222 to the terminal module 206 along with the signed message 224.

The terminal module 206 includes a signature verification module 250 and possibly other modules. The signature verification module 250 can verify the digital signature associated with the signed message 224. An example technique for verifying a digital signature based on an elliptic curve key pair is provided by the Elliptic Curve Digital Signature Algorithm (ECDSA). The signed message 224 includes a digital signature purportedly generated by a user entity associated with an identification value U. The signature verification module 250 can receive the implicit certificate 222 from the terminal module 206 or retrieve the implicit certificate 222 associated with the identification value U from another source. For example, the signature verification module 250 can send a request to the certificate database 236, and the signature verification module 250 can receive the implicit certificate 222 from the certificate database 236 in response. The signature verification module 250 can verify the authenticity of the digital signature based on the public key, reconstructed from public key reconstruction data in the implicit certificate 222. For example, the signature verification module can compute the public key *Q_{U}* based on the public key reconstruction data *P_{U},* the implicit certificate 222, and a public key *Q_{CA}* of the certificate authority.

The certificate authority module 204 includes a certificate generation module 230, a certificate verification module 232, and possibly other modules. The certificate generation module 230, the certificate verification module 232, and possibly additional modules of the certificate authority module 204 can perform one or more operations for issuing the implicit certificate 222 for use in the cryptography system 200. For example, the certificate generation module 230 and the certificate verification module 232 may be configured to perform one or more of the operations in the process 400 shown in FIG. 4, or the certificate generation module 230 and the certificate verification module 232 may be configured to issued implicit certificates in a different manner, for example, in coordination with additional or different types of modules of the certificate authority module 204.

The certificate generation module 230 can generate the implicit certificate 222, for example, in response to receiving the certificate request 220 or in response to information from the certificate verification module 232. In some instances, the certificate generation module 230 generates an initial certificate in response to receiving the certificate request 220, and the certificate generation module 230 subsequently generates a new certificate in response to information provided by the certificate verification module 232. For example, if the certificate verification module 232 determines that the initial certificate corresponds to a trivial public key or the public key of another user entity, the certificate verification module 232 can instruct the certificate generation module 230 to generate a new certificate.

The certificate generation module 230 generates the implicit certificate 222 based on the information in the certificate request 220. For example, the certificate generation module 230 can select a random value *k* and generate public key reconstruction data *P_{U}* by computing *P_{U} = R_{U} + kG,* where *R_{U}* is the elliptic curve point generated by the request generation module 240 and included in the certificate request 220. The certificate authority module 204 may have a random number generator module that generates random numbers. The certificate generation module 230 can encode the public key reconstruction data *P_{U},* and sometimes other information, in an implicit certificate *Cert_{U}.* The implicit certificate *Cert_{U}* can be generated by a certificate encoding scheme, for example, a fixed-length field scheme, a minimal ANS.1 encoding scheme, or an X.509-compliant ANS.1 encoding scheme.

The certificate verification module 232 can receive the information generated by the certificate generation module 230 and verify that issuing the implicit certificate *Cert_{U}* will not bind the identification value U to one or more particular public key values. For example, the certificate verification module 232 can determine whether the implicit certificate *Cert_{U}* corresponds to a trivial public key or to a public key that has already been assigned to another user entity.

In some implementations, the certificate verification module 232 verifies the implicit certificate *Cert_{U}* by computing the public key *Q_{U}* and comparing the public key *Q_{U}* to the particular public key values. The public key *Q_{U}* can be calculated by computing *Q_{U}* = *eP_{U} + Q_{CA},* where the hash function H generates the hash value *e = H(Cert_{U}),* an integer modulo *n.* When the public key *Q_{U}* is a trivial public key value, such as the identity element of the elliptic curve group, the certificate verification module 232 can instruct the certificate generation module 230 to generate a new implicit certificate. Additionally or alternatively, when the public key *Q_{U}* is a public key value of another user entity, the certificate verification module 232 can instruct the certificate generation module 230 to generate a new implicit certificate. The check against other public key values can be iterated, for example, until the certificate verification module 232 verifies that the implicit certificate *Cert_{U}* does not correspond to a public key value associated with another user entity.

The certificate verification module 232 can use the public key data 234 to determine whether the public key *Q_{U}* has already been assigned to another user entity in the cryptography system 200. For example, suppose two user entities (having user identifications *U1* and U2) are issued ECQV implicit certificates *Cert*_{*U*1} and *Cert*_{*U*2}, with *k_{U1}* being the first user entity's randomness, *k_{U2}* being the second user entity's randomness, *k_{CA1}* being the certificate authority's randomness for generating *Cert*_{*U*1}, and *k_{CA2}* being the certificate authority's randomness for generating *Cert*_{*U*2}*.* The hash values of the implicit certificates can be represented *e*₁ *= H*(*Cert*_{*U*1}) and *e*₂ *= H*(*Cert*_{*U*2}), and the public keys of the two user entities will be the same if *e*₁(*k*_{*cA*1} + *k*_{*U*1}) *= e*₂(*k*_{*CA*2} *+ k*_{*U*2}). In some implementations, the certificate verification module 232 performs a check while issuing implicit certificates to ensure that no two user entities are assigned the same public key. For example, the public key data 234 can include a list of public key values or other information from which the public key values can be derived. For example, the public key data 234 can include a list of all public keys that have been assigned to user entities in the cryptography system 200, a list of all public keys that have been assigned to user entities within a certain timeframe, etc. The public key data 234 can be stored as a sorted list or in another format to allow efficient comparison of the public key *Q_{U}* to the public key values in the list.

The certificate verification module 232 can perform multiple types of checks to ensure that public keys used in the cryptography system 200 provide the level of security specified by the cryptography system 200. For example, in addition to trivial key pairs and previously-issued key pairs, there may be other types of public keys that provide a lower level of security in the cryptography system 200 (e.g., public keys that can be compromised with less than a brute force attack). In some implementations, the certificate verification module 232 can perform checks to verify that the implicit certificate *Cert_{U}* does not correspond to the public key values that are known to be compromisable or otherwise undesirable in the cryptography system 200.

If the implicit certificate *Cert_{U}* is approved by the certificate verification module 232, the implicit certificate *Cert_{U}* can be published as the implicit certificate 222. If the implicit certificate *Cert_{U}* is not approved by the certificate verification module 232, a new implicit certificate Cert'_{U} can be generated by the certificate generation module 230 and verified by the certificate verification module 232. The process can be iterated until an implicit certificate is approved by the certificate verification module 232, or until another terminating condition is reached.

FIG. 3 is a signaling and flow chart showing example communications and operations in a cryptography system 300. The entities represented in FIG. 3 are a requester 302, a certificate authority 304, and a verifier 306. The requester 302 and the verifier 306 can correspond to user entities in the cryptography system 300. For example, the requester 302 can correspond to the terminal module 202 in FIG. 2 and the verifier 306 can correspond to the terminal module 206 in FIG. 2. As another example, the requester 302 can correspond to the terminal 102 in FIG. 1, and the verifier 306 can correspond to the terminal 106 in FIG. 1. Similarly, the certificate authority 304 can correspond the certificate authority module 204 in FIG. 2, the certificate authority 304 can correspond the certificate authority server 104 in FIG. 1, or both. The entities represented in FIG. 3 can correspond to additional different types of hardware, software, systems, devices, or combinations of these.

At a high level, the requester 302 obtains an implicit certificate from the certificate authority 304. The implicit certificate allows the verifier 306 to reconstruct the public key of the requester 302. In an example shown, the certificate authority 304 establishes the elliptic curve domain parameters, a hash function, the certificate encoding format, and all parties have selected a random number generator. In some implementations, the requester 302, the certificate authority 304, and the verifier 306 use different random number generators. The certificate authority 304 can generate the certificate authority's key pair (*d_{CA}, Q_{CA}*), and the requester 302 and the verifier 306 can receive authentic copies of the certificate authority's public key and domain parameters.

The example operations and communications in the cryptography system 300 shown in FIG. 3 are described with respect to the ECQV implicit certificate scheme. The operations and communications shown in FIG. 3 can be adapted or modified for additional or different types of implicit certificate schemes. In the example shown in FIG. 3, the requester 302, the certificate authority 304, and the verifier 306 are each in possession of elliptic curve domain parameters T = *(p, a, b, G, n, h)* and a random number generator, and they have agreed on a hash function H, a certificate encoding scheme, valid data types, and any other parameters necessary to carry out the operations shown. In addition, in some implementations the requester 302 has been assigned a unique identifier U.

At 310, the requester 302 generates a certificate request. The certificate request can be generated as described with respect to the request generation module 240 in FIG. 2 or in a different manner. For example, the requester 302 can generate the request by selecting a value *kᵤ* ∈*_{R}* [1,*n* - 1] and computing *R_{U} := k_{U}G.* At 312, certificate request data is sent from the requester 302 to the certificate authority 304. For example, the certificate request data can include the values U and *R_{U}* in the appropriate data format. When the certificate authority 304 receives the request, the certificate authority 304 can verify the identity of the requester 302, perform validity checks, and determine that an implicit certificate will be issued.

At 314, the certificate authority 304 issues an implicit certificate. Issuing the implicit certificate includes generating and verifying the implicit certificate data. The certificate authority 304 can issue the implicit certificate by executing one or more operations described with respect to the process 400 shown in FIG. 4.

The implicit certificate data can be generated as described with respect to the certificate generation module 230 of FIG. 2 or in a different manner. For example, the certificate authority 304 can select a random value *k* ∈*_{R}* [1, *n* - 1], generate the public key reconstruction data *P_{U}* by computing *P_{U}* = *R_{U} + kG,* generate the implicit certificate data *Cert_{U}* by calling a certificate encoding routine *Cert_{U} :*= *Encode*(*P_{U}, U,*),* generate the hash value e by computing *e* := *Hₙ*(*Cert_{U}*), and generate the private key contribution data *r := ek + d_{CA}* mod *n*.

The implicit certificate data can be verified as described with respect to the certificate verification module 232 of FIG. 2 or in a different manner. For example, the certificate authority 304 can verify the certificate by verifying that the public key *Q_{U} = eP_{U} + Q_{CA}* is not the identity element *O* or another trivial public key value. As another example, the certificate authority 304 can verify the certificate by verifying that the public key *Q_{U}* = *eP_{U} + Q_{CA}* is not equal to a public key value associated with another user entity.

At 318, the verified certificate data 318 is sent from the certificate authority 304 to the requester 302. For example, the certificate data can include the values *r* and *Cert_{U}* in the appropriate data formats. The requester 302 receives the certificate data from the certificate authority 304. The requester 302 can use the certificate data to generate the requester's elliptic curve key pair (*d_{U}, Q_{U}*)*.* The requester can generate the elliptic curve key pair (*d_{U}, Q_{U}*) by computing the hash value *e* := *Hₙ*(*Cert_{U}*)*,* computing the private key value *d_{U}* = *ek_{U}* + *r* (mod *n*), and computing the public key value *Q_{U}* = *eP_{U}* + *Q_{CA}.* The requester 302 can then validate the elliptic curve key pair.

At 320, the requester 302 generates a digital signature based on the requester's private key *d_{U}* and a message M. The digital signature may be generated as described above with respect to the signature generation module 242 of FIG. 2 or in a different manner. The requester 302 can generate a signed message, for example, by appending the digital signature to the message *M*. At 322, the requester 302 sends the signed message to the verifier 306. At 324, the verifier 306 obtains public data including the implicit certificate of the requester 302 and possibly other data. At 326, the verifier 306 verifies the digital signature in the signed message from the requester 302. The digital signature may be verified as described above with respect to the signature verification module 250 of FIG. 2 or in a different manner.

FIG. 4 is a flow chart showing an example process 400 for issuing implicit certificates. The process 400 can be implemented by a certificate authority of a cryptography system. For example, the process 400 can be implemented by the certificate authority module 204 shown in FIG. 2, which may be implemented by the certificate authority server 104 shown in FIG. 1. The example process 400 shown in FIG. 4 can be implemented using additional, fewer, or different operations, which can be performed in the order shown or in a different order. In some implementations, one or more of the operations can be repeated or iterated, for example, until a terminating condition is reached. For purposes of illustration, the operations of the example process 400 are described below as implemented by a certificate authority of an elliptic curve cryptography system. The example process 400 can also be implemented using different groups. Moreover, one or more of the operations of the example process 400 can be implemented by an entity in the cryptography system other than a certificate authority. For example, one or more of the operations can be executed by a user entity.

In some implementations, prior to executing the process 400, the certificate authority has decided to issue a certificate to a particular user entity in the cryptography system that requested the certificate. For example, prior to executing the process 400, the certificate authority may authenticate the identity of the requester, receive one or more cryptographic inputs from the requester, or to perform other preliminary operations. In some cases, the certificate authority has identified a random number generator to be used in selecting random numbers. The random number generator can be an algorithm that has been approved for a specified level of security in the cryptography system. In some implementations, one or more conventional random number generators can be used, for example, random number generators using deterministic random bit generators.

At 402, a certificate request is received. The certificate request, as well as other data inputs, may be received from a remote source over a data network, from a local memory, or a combination of these. The data inputs may include data inputs that are generated by another entity in the cryptography system (e.g., the requester), data inputs that are generated locally by the certificate authority, or both. The inputs can include information that identifies elliptic curve domain parameters established by the certificate authority, a hash function H selected by the certificate authority, the certificate authority's private key *d_{CA},* the certificate request (U, *R_{U}*) of the requester, a certificate encoding scheme and related processes, additional input fields for the implicit certificate, and other information.

The elliptic curve domain parameters, which can be generated by the certificate authority or another entity, include the field size q, the elliptic curve coefficients *a* and b, the base point generator G, the order *n* of the base point generator, the cofactor h (where *hn* is the number of points on the elliptic curve), and others. In some instances, the elliptic curve domain parameters include a seed value for selecting random values. In cases where the field is a characteristic two finite field *(i.e., q* = 2*^{m}*), the elliptic curve domain parameters include an indication of the basis (e.g., the reduction polynomial). The certificate authority can verify that the elliptic curve domain parameters provide the specified security parameters.

The hash function H is a hash function that has been approved for the specified security level in the cryptography system. In some implementations, one or more conventional hash functions in the SHA-2 family can be used (e.g., SHA-256, SHA-512). Additional or different hash functions may be used.

The certificate authority's key pair includes the certificate authority's private key *d_{CA}* and the certificate authority's public key *Q_{CA}.* In elliptic curve cryptography systems, the certificate authority's private key *d_{CA}* corresponds to an integer value, and the certificate authority's public key *Q_{CA}* corresponds to a point in an elliptic curve group. The certificate authority's key pair can be generated based on the certificate authority's random number generator. The certificate authority can perform a validity check to ensure that its key pair is a valid key pair for use in the cryptography system.

The certificate request can include an elliptic curve point *R_{U}* and an identification value U associated with the requester. The identification value U can be a unique identifier for a particular user entity, a particular device or system, a particular terminal module, or a combination of these. For example, in e-mail applications, the identification value U can identify an e-mail user, an e-mail account, an e-mail server, an e-mail capable device, some other entity, or a combination of these. The elliptic curve point *R_{U}* can be an elliptic curve point generated by the requester based on the elliptic curve domain parameters. For example, the requester may generate the elliptic curve point *R_{U}* by selecting a random number *k_{U}* and computing *R_{U}* = *k_{U}G.* The requester may convert the elliptic curve point to an appropriate data format (e.g., an octet string) for transmission to the certificate authority.

The certificate encoding scheme includes rules for generating an implicit certificate based public key reconstruction data generated for the requester, and possibly other information, for example, the requester's identity U. The certificate authority encodes the information in the implicit certificate by generating the certificate according to the certificate encoding scheme, and the users of the cryptography system may extract the information from the implicit certificate by inverting the certificate encoding scheme. Multiple different types of certificate encoding schemes can be used, as described herein.

At 404, data for reconstructing the requester's public key is generated. For example, the public key reconstruction data can be generated at the certificate authority. The public key reconstruction data can include an elliptic curve point *P_{U}* and additional data in some cases. The point *P_{U}* can be an elliptic curve point in the elliptic curve group designated by the elliptic curve domain parameters.

The elliptic curve point *P_{U}* can be generated based on the elliptic curve point *R_{U}* in the certificate request and additional data in some cases. In some examples, the elliptic curve point *R_{U}* can be received by the certificate authority as an octet string or in another format. The elliptic curve point *R_{U}* can be converted from its initial format to an elliptic curve point format, and the appropriately formatted value can then be validated to ensure that the elliptic curve point *R_{U}* corresponds to a public key value that is valid in the cryptography system. The elliptic curve point *P_{U}* can be generated by computing *P_{U}* = *R_{U} + kG.* The elliptic curve key pair *(k, kG*) can be generated based on the elliptic curve domain parameters. In some implementations, *k* is a random number in the interval [1, *n*-1] generated using the random number generator at the certificate authority, and the elliptic curve point *kG* is also computed at the certificate authority. Additional or different techniques can be used to generate the public key reconstruction data.

At 406, an implicit certificate is generated. For example, the implicit certificate can be generated at the certificate authority. The implicit certificate data generated by the certificate authority can include the implicit certificate *Cert_{U}.* The implicit certificate *Cert_{U}* can be generated using the certificate encoding scheme, for example, based on the public key reconstruction data *(e.g., P_{U}*) and additional data. In some implementations, the implicit certificate is generated based on the public key reconstruction data along with the requester identification value U or certificate information *I_{U}* that includes the requester identification value U. For example, the certificate information *I_{U}* may include information about the certificate authority, information about when the certificate expires, information about how or when the certificate was generated, information about an intended use of the public key, a serial number of the implicit certificate, and the validity period of the certificate and possibly additional information.

In some implementations, the public key reconstruction data is converted to a specified data type for the certificate encoding process. For example, the elliptic curve point *P_{U}* can be converted to an octet string or another data format that is used by the certificate encoding scheme. The module or program that executes the certificate encoding scheme can be called with the necessary input fields and the appropriately-formatted public key reconstruction data (e.g., the octet string representation of the elliptic curve point *P_{U}*), and the resulting output can be the implicit certificate *Cert_{U}.*

Examples of implicit certificate encoding schemes include the fixed-length field scheme, the minimal ANS.1 encoding scheme, and the X.509-compliant ANS.1 encoding scheme. The fixed-length field scheme and the ASN.1 encoding scheme can be used to achieve greater bandwidth efficiency in some cases. The X.509-compliant ASN.1 encoding scheme generates an implicit certificate that can be re-encoded as a standard X.509 certificate (e.g., with or without an explicit signature value).

A certificate encoded by the fixed-length field scheme includes a series of fields, each having a fixed length. The format of the certificate is known by all entities in the cryptography scheme. For example, the entities can all agree on a number of fields *fₙ* in the certificate, an octet length for each of the fields, an index value i indicating which field will contain the public key reconstruction data, and validity rules for each of the field elements. In some implementations, one of the fields in the certificate is the public key reconstruction data, and the other fields can have an open format.

In an example of a fixed-length field encoding scheme, the data inputs include a series of *fₙ* octet strings *F*₁, *F*₂,..., *F_{fn}*. The index value i is an integer in the interval [1, ..., *fₙ*], and the *i*^{th} octet string is the octet-encoded elliptic curve point *P_{U}.* In this example, the octet-encoded elliptic curve point *P_{U}* is the public key reconstruction data to be encoded in the implicit certificate. The implicit certificate *Cert_{U}* can be generated based on these data inputs by concatenating the octet strings, for example *Cert_{U}* = *F*₁∥···∥*Fᵢ*∥···∥*F_{fn}*. Other types of fixed-length field encoding schemes may be used.

At 408, it is determined whether the requester's public key corresponds to an unassignable public key. For example, the determination can be made at the certificate authority. The determination whether the requester's public key corresponds to an unassignable public key value can be made by computing the requester's public key and comparing the requester's public key to particular public key values to determine whether they are equal. The requester's public key may be computed at the certificate authority based on the public key reconstruction data, the implicit certificate, the certificate authority's public key, and additional data in some cases. In some instances, the hash function H is used to compute a value e, for example by computing *e = H*(*Cert_{U}*)*,* an integer modulo *n*. The requester's public key *Q_{U}* can then be calculated by computing *Q_{U} = eP_{U} + Q_{CA}.* The requester's public key *Q_{U}* can be compared to the unassignable public key value to ensure that the requester is not bound to the unassignable public key. In some instances, the requester's public key is compared to multiple different unassignable public key values to ensure that the requester is not bound to any of the unassignable public keys.

In some implementations, at 408 the certificate authority determines whether the requester's public key corresponds to a trivial key pair. For example, the certificate authority can determine whether the public key *Q_{U}* corresponds to the identity element of the elliptic curve group based on the second elliptic curve point *P_{U},* the implicit certificate *Cert_{U},* and a public key *Q_{CA}* of the certificate authority by comparing the public key *Q_{U}* to the identity element *O*. In such instances, the hash function can be used to compute e = *H*(*Cert_{U}*)*,* and if *eP_{U} + Q_{CA}* = *O,* the process 400 can return to 404 so that new public key reconstruction data can be generated. Additionally or alternatively, the certificate authority may determine whether the requester's public key corresponds to a different trivial key pair (e.g., other than the identity element of the elliptic curve group).

In some implementations, at 408 the certificate authority determines whether the requester's public key has already been assigned to another user entity in the cryptography system. For example, the certificate authority can compare the requester's public key to public keys that have been issued in the cryptography system. In some implementations, the certificate authority maintains a list of public keys {*Q*₁, *Q*₂, ...} that have been assigned to other users. In some cases, the certificate authority can access the list of public keys, for example, from a public key server or another system. The list of public keys may include all keys that have been issued, public keys that have been issued in a certain time frame, public keys that are currently valid, or another subset of public keys. The certificate authority can compute the requester's public key *Q_{U},* and if *eP_{U} + Q_{CA}∈*{*Q*₁, *Q*₂, ...}, the process 400 can return to 404 so that new public key reconstruction data can be generated.

In cases where it has been determined at 408 that the requester's public key corresponds to the particular public key value (e.g., a trivial public key value, another user entity's public key value, etc.), the process 400 returns to 404 to generate new public key reconstruction data for the requester. For example, when the process returns to 404, a new elliptic curve key pair (*k', k'G*) can be generated, and a new elliptic curve point P'_{U} can be generated by computing P'_{U} = R_{U} + *k*'G*.* The new value *k*' is a new random number in the interval [1, *n*-1] generated using the random number generator at the certificate authority. The process 400 can proceed from 404 with the new public key reconstruction data. For example, at 406 a new implicit certificate Cert'_{U} can be generated based on the new public key reconstruction data P'_{U} and so forth. The operations 404, 406, and 408 can be iterated until a terminating condition is reached. For example, the operations may be iterated until the requester's public key does not correspond to the particular public key value(s) at 408. In some instances, another terminating condition may be used.

In cases where it has been determined at 408 that the requester's public key does not correspond to the particular public key value, the requester's public key can be considered acceptable for publication in the cryptography system, and the process 400 can continue issuing the implicit certificate for the requester. For example, after verifying the requester's public key, data for reconstructing the certificate requester's private key can be generated. For example, the private key contribution data *r* can be generated at the certificate authority. The private key contribution data *r* can be generated by computing r = *ek + d_{CA}* (mod *n).* In some implementations, the private key contribution data can be generated in a different manner.

At 410, the implicit certificate data is published. For example, the implicit certificate data can be published at the certificate authority. The implicit certificate data can be published by sending the implicit certificate *Cert_{U}* to the requester, by storing the implicit certificate *Cert_{U}* in a database that is accessible to the requester and other users of the cryptography system, or in another manner. In some instances, the output of the process 400 includes the private key contribution data *r* and the implicit certificate *Cert_{U},* which can be made public or sent to the requester over an insecure channel, or both. For example, a response *(r, Cert_{U}*) can be sent from a certificate authority server to a requester terminal over an insecure channel. The response from certificate authority may be made public by publishing all or part of the response, for example, in a certificate registration authority. In some cases, the user entity that generates the digital signature sends the implicit certificate to the message recipient along with the signed message.

After receiving the response *(r, Cert_{U}*)*,* the requester can utilize the private key reconstruction data to generate the requester's private key. For example, the requester can generate the requester's private key *d_{U}* by generating the hash value e = *H*(*Cert_{U}*) and then computing *d_{U} = r + ek_{U}* mod n where *k_{U}* is the random number that was used to generate the elliptic curve point *R_{U}* in the request *(i.e., R_{U} = k_{U}G*). The requester can use the private key *d_{U}* to generate digital signatures. For example, when the requester sends a message to another user in the cryptography system, the requester can generate a digital signature based on the message and the requester's private key, and then send the message and the digital signature to the recipient. The recipient can then obtain the sender's implicit certificate and verify the digital signature.

After the requester's implicit certificate data has been published, user entities in the cryptography system can access the requester's implicit certificate data for verifying digital signatures from the requester. For example, terminal modules in the cryptography system can use the certificate decoding scheme (corresponding to the certificate encoding scheme used by the certificate authority to generate the certificate) to extract the elliptic curve point *P_{U}* from the implicit certificate *Cert_{U}.* A user entity that receives the requester's digital signature can compute the hash value e = *H*(*Cert_{U}*) based on the implicit certificate *Cert_{U},* and the user entity can then generate the requester's public key by computing *Q_{U} = eP_{U} + Q_{CA}.* As such, the requester's public key *Q_{U}* (or the values *e, P_{U}, Q_{CA}* that can be used to compute the requester's public key) can be used by user entities in the cryptography system to verify digital signatures purportedly generated by the requester.

Subject matter and operations described in this specification can be implemented in digital electronic circuitry, or in computer software, firmware, or hardware, including the structures disclosed in this specification and their structural equivalents, or in combinations of one or more of them. Some of the subject matter described in this specification can be implemented as one or more computer programs, i.e., one or more modules of computer program instructions, encoded on non-transitory computer storage medium for execution by, or to control the operation of, data processing apparatus. Alternatively or in addition, the program instructions can be encoded for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple cards, disks, or other storage devices).

The operations described in this specification can be implemented as operations performed by a data processing apparatus on data stored on one or more computer-readable storage devices or received from other sources. The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computing device or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computing device are a processor for performing actions in accordance with instructions and one or more memory devices for storing instructions and data. Generally, a computing device will also include, or be operatively coupled to receive data from or transfer data to, or both, one or more storage devices for storing data. However, a computing device need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, subject matter described in this specification can be implemented on a computer having a display device, e.g., an LCD (liquid crystal display) screen for displaying information to the user and a keyboard and a pointing device, e.g., touch screen, stylus, mouse, etc. by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computing device can interact with a user by sending documents to and receiving documents from a device that is used by the user; for example, by sending web pages to a web browser on a user's client device in response to requests received from the web browser.

Some of the subject matter described in this specification can be implemented in a computing system that includes a back-end component, e.g., as a data server, or that includes a middleware component, e.g., an application server, or that includes a front-end component, e.g., a client computing device having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a data network.

The computing system can include clients and servers. A client and server are generally remote from each other and typically interact through a data network. The relationship of client and server arises by virtue of computer programs running on the respective computers and having a client-server relationship to each other. In some implementations, a server transmits data to a client device. Data generated at the client device can be received from the client device at the server.

While this specification contains many specific implementation details, these should not be construed as limitations on the scope of what may be claimed, but rather as descriptions of features specific to particular implementations. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

Thus, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

The following are particularly preferred aspects according to the present disclosure.
Numbered clause 1. A method for issuing an implicit certificate at a certificate authority of an elliptic curve cryptography system, the method comprising:
   receiving a certificate request associated with a requester, the certificate request comprising a first point *R_{U}* in an elliptic curve group;
   generating a second point *P_{U}* in the elliptic curve group in response to receiving the request and based on the first point *R_{U};*
   generating an implicit certificate *Cert_{U}* based on the second point *P_{U};* and
   determining whether a public key *Q_{U}* of the requester corresponds to an identity element of the elliptic curve group based on the second point *P_{U}*, the implicit certificate *Cert_{U},* and a public key *Q_{CA}* of the certificate authority.
Numbered clause 2. The method of clause 1, further comprising generating a hash value e based on the implicit certificate *Cert_{U},* wherein determining whether the public key *Q_{U}* corresponds to the identity element comprises determining whether the public key *Q_{U}* corresponds to the identity element based on the second point *P_{U},* the hash value e, and the public key *Q_{CA}* of the certificate authority.
Numbered clause 3. The method of clause 2, wherein determining whether the public key *Q_{U}* corresponds to the identity element comprises:
   generating the public key *Q_{U}* by computing *eP_{U} + Q_{CA};* and
   comparing the public key *Q_{U}* to the identity element.
Numbered clause 4. The method of clause 2, further comprising:
   receiving elliptic curve domain parameters that identify the elliptic curve group and a base point generator G in the elliptic curve group;
   selecting a value *k*; and
   generating a third point *kG* in the elliptic curve group, wherein generating the second point *P_{U}* comprises computing *R_{U}*+*kG.*
Numbered clause 5. The method of clause 4, wherein when the public key *Q_{U}* corresponds to the identity element, the method further comprises:
   selecting another value *k*';
   generating a fourth point *k'G* in the elliptic curve group;
   generating a fifth point P'_{U} in the elliptic curve group by computing *R_{U}*+*k'G;*
   generating a new implicit certificate Cert'_{U} based on the fifth point P'_{U} and
   determining whether a new public key Q'_{U} of the requester corresponds to an identity element of the elliptic curve group based on the fifth point P'_{U} the new implicit certificate Cert'_{U} and the public key *Q_{CA}* of the certificate authority.
Numbered clause 6. The method of clause 4, wherein when the public key *Q_{U}* does not correspond to the identity element, the method further comprises generating private key contribution data r based on the hash value e, the value *k,* and a private key of the certificate authority *d_{CA}.*
Numbered clause 7. The method of clause 6, further comprising sending a response to the requester, the response comprising the implicit certificate *Cert_{U}* and the private key contribution data r.
Numbered clause 8. The method of clause 1, further comprising determining whether the public key *Q_{U}* corresponds to a public key associated with another entity in the cryptography system.
Numbered clause 9. The method of clause 1, further comprising publishing the implicit certificate *Cert_{U}.*
Numbered clause 10. The method of clause 1, wherein the request further comprises an identification U associated with the requester, and generating the implicit certificate *Cert_{U}* comprises generating the implicit certificate *Cert_{U}* based on the second point *P_{U}* and the identification U.
Numbered clause 11. The method of clause 10, further comprising obtaining certificate data *I_{U}* comprising the user identification U and additional information, wherein generating the implicit certificate *Cert_{U}* comprises generating the implicit certificate *Cert_{U}* based on the second point *P_{U}* and the certificate data *I_{U}.*
Numbered clause 12. The method of clause 1, wherein generating the implicit certificate *Cert_{U}* comprises encoding the second point *P_{U}* in the implicit certificate *Cert_{U}* according to an implicit certificate encoding scheme.
Numbered clause 13. A system comprising a certificate authority server, the certificate authority server comprising data processing apparatus operable to perform operations for issuing an implicit certificate, the operations comprising:
   receiving a certificate request associated with a requester, the certificate request comprising a first point *R_{U}* in an elliptic curve group;
   generating a second point *P_{U}* in the elliptic curve group in response to receiving the request and based on the first point *R_{U};*
   generating an implicit certificate *Cert_{U}* based on the second point *P_{U};* and
   determining whether a public key *Q_{U}* of the requester corresponds to an identity element of the elliptic curve group based on the second point *P_{U}*, the implicit certificate *Cert_{U},* and a public key *Q_{CA}* of the certificate authority.
Numbered clause 14. The system of clause 13, the operations further comprising generating a hash value e based on the implicit certificate *Cert_{U},* wherein determining whether the public key *Q_{U}* corresponds to the identity element comprises determining whether the public key *Q_{U}* corresponds to the identity element based on the second point *P_{U},* the hash value e, and the public key *Q_{CA}* of the certificate authority.
Numbered clause 15. The system of clause 14, wherein determining whether the public key *Q_{U}* corresponds to the identity element comprises
   generating the public key *Q_{U}* by computing *eP_{U} + Q_{CA};* and
   comparing the public key *Q_{U}* to the identity element.
Numbered clause 16. The system of clause 13, the operations further comprising:
   receiving elliptic curve domain parameters that identify the elliptic curve group and a base point generator G in the elliptic curve group;
   selecting a value *k*; and
   generating a third point *kG* in the elliptic curve group, wherein generating the second point *P_{U}* comprises computing *R_{U}*+*kG.*
Numbered clause 17. The system of clause 16, the operations further comprising:
   generating private key contribution data r based on the hash value e, the value *k,* and a private key of the certificate authority *d_{CA}*; and
   sending a response to the requester, the response comprising the implicit certificate *Cert_{U}* and the private key contribution data r.
Numbered clause 18. The system of clause 17, further comprising a terminal associated with the requester, the terminal comprising data processing apparatus operable to perform operations comprising:
   generating the certificate request; and
   sending the certificate request to the certificate authority server.
Numbered clause 19. The system of clause 18, the data processing apparatus of the terminal operable to perform operations further comprising receiving the response from the certificate authority server.
Numbered clause 20. A non-transitory computer-readable medium storing instructions that are operable when executed by data processing apparatus to perform operations for issuing an implicit certificate, the operations comprising:
   receiving a certificate request associated with a requester, the certificate request comprising a first point *R_{U}* in an elliptic curve group;
   generating a second point *P_{U}* in the elliptic curve group in response to receiving the request and based on the first point *R_{U}*;
   generating an implicit certificate *Cert_{U}* based on the second point *P_{U}*; and
   determining whether a public key *Q_{U}* of the requester corresponds to an identity element of the elliptic curve group based on the second point *P_{U}*, the implicit certificate *Cert_{U},* and a public key *Q_{CA}* of the certificate authority.
Numbered clause 21. The computer-readable medium of clause 20, the operations further comprising generating a hash value e based on the implicit certificate *Cert_{U},* wherein determining whether the public key *Q_{U}* corresponds to the identity element comprises determining whether the public key *Q_{U}* corresponds to the identity element based on the second point *P_{U},* the hash value e, and the public key *Q_{CA}* of the certificate authority.
Numbered clause 22. The computer-readable medium of clause 21, wherein determining whether the public key *Q_{U}* corresponds to the identity element comprises:
   generating the public key *Q_{U}* by computing *eP_{U} + Q_{CA}*; and
   comparing the public key *Q_{U}* to the identity element.
Numbered clause 23. The computer-readable medium of clause 21, the operations further comprising:
   receiving elliptic curve domain parameters that identify the elliptic curve group and a base point generator G in the elliptic curve group;
   selecting a value *k*; and
   generating a third point *kG* in the elliptic curve group, wherein generating the second point *P_{U}* comprises computing *R_{U}*+*kG.*
Numbered clause 24. The computer-readable medium of clause 20, the operations further comprising determining whether the public key *Q_{U}* corresponds to a public key associated with another entity in the cryptography system.
Numbered clause 25. The computer-readable medium of clause 20, the operations further comprising publishing the implicit certificate *Cert_{U}.*
Numbered clause 26. The computer-readable medium of clause 20, wherein the certificate further comprises an identification U associated with the requester, and generating the implicit certificate *Cert_{U}* comprises generating the implicit certificate *Cert_{U}* based on the second point *P_{U}* and the identification U.

## Claims

1. A method for issuing an implicit certificate at a certificate authority of an elliptic curve cryptography system, the method comprising:
receiving a certificate request associated with a requester, the certificate request comprising a first point *R_{U}* in an elliptic curve group;
generating a second point *P_{U}* in the elliptic curve group in response to receiving the request and based on the first point *R_{U};*
generating an implicit certificate *Cert_{U}* based on the second point *P_{U}*; and
determining whether a public key *Q_{U}* of the requester corresponds to an identity element of the elliptic curve group based on the second point *P_{U}*, the implicit certificate *Cert_{U},* and a public key *Q_{CA}* of the certificate authority.

2. The method of claim 1, further comprising generating a hash value e based on the implicit certificate *Cert_{U},* wherein determining whether the public key *Q_{U}* corresponds to the identity element comprises determining whether the public key *Q_{U}* corresponds to the identity element based on the second point *P_{U},* the hash value e, and the public key *Q_{CA}* of the certificate authority.

3. The method of claim 2, wherein determining whether the public key *Q_{U}* corresponds to the identity element comprises:
generating the public key *Q_{U}* by computing *eP_{U} + Q_{CA};* and
comparing the public key *Q_{U}* to the identity element.

4. The method of claim 2, further comprising:
receiving elliptic curve domain parameters that identify the elliptic curve group and a base point generator G in the elliptic curve group;
selecting a value *k;* and
generating a third point *kG* in the elliptic curve group, wherein generating the second point *P_{U}* comprises computing *R_{U}*+*kG.*

5. The method of claim 4, wherein when the public key *Q_{U}* corresponds to the identity element, the method further comprises:
selecting another value *k*';
generating a fourth point *k'G* in the elliptic curve group;
generating a fifth point P'_{U} in the elliptic curve group by computing *R_{U}*+*k'G;*
generating a new implicit certificate Cert'_{U} based on the fifth point P'_{U} and
determining whether a new public key Q'_{U} of the requester corresponds to an identity element of the elliptic curve group based on the fifth point P'_{U} the new implicit certificate
Cert'_{U,} and *th*e public key *Q_{CA}* of the certificate authority.

6. The method of claim 4, wherein when the public key *Q_{U}* does not correspond to the identity element, the method further comprises generating private key contribution data r based on the hash value e, the value *k,* and a private key of the certificate authority *d_{CA}.*

7. The method of claim 6, further comprising sending a response to the requester, the response comprising the implicit certificate *Cert_{U}* and the private key contribution data r.

8. The method of claim 1, further comprising determining whether the public key *Q_{U}* corresponds to a public key associated with another entity in the cryptography system.

9. The method of claim 1, further comprising publishing the implicit certificate *Cert_{U}.*

10. The method of claim 1, wherein the request further comprises an identification U associated with the requester, and generating the implicit certificate *Cert_{U}* comprises generating the implicit certificate *Cert_{U}* based on the second point *P_{U}* and the identification U.

11. The method of claim 10, further comprising obtaining certificate data *I_{U}* comprising the user identification U and additional information, wherein generating the implicit certificate *Cert_{U}* comprises generating the implicit certificate *Cert_{U}* based on the second point *P_{U}* and the certificate data *I_{U}.*

12. The method of claim 1, wherein generating the implicit certificate *Cert_{U}* comprises encoding the second point *P_{U}* in the implicit certificate *Cert_{U}* according to an implicit certificate encoding scheme.

13. A system comprising a certificate authority server, the certificate authority server comprising data processing apparatus operable to perform the method of any of claims 1-12.

14. The system of claim 13, further comprising a terminal associated with the requester, the terminal comprising data processing apparatus operable to perform operations comprising:
generating the certificate request; and
sending the certificate request to the certificate authority server.

15. A computer-readable medium storing instructions that are operable when executed by data processing apparatus to perform the method of any of claims 1-12.
